# EUROPEAN PATENT APPLICATION

(11) **EP 2 104 159 A1**
(43) Date of publication of application: **23.09.2009**
(21) Application number: 09154729.9
(22) Date of filing: 10.03.2009
(51) Int. Cl.: H01M 2/04, H01M 2/12

(54) **Secondary battery comprising a cap assembly**

(30) Priority: 17.03.2008 KR 20080024378
(71) Applicant: Samsung SDI Co., Ltd., Suwon-si Gyeonggi-do (KR)
(72) Inventor: Kim, Kwang-Chun, Gyeonggi-do (KR)
(74) Representative: Gulde Hengelhaupt Ziebig & Schneider

(57) **Abstract**

The present invention relates to a secondary battery including a cap assembly that prevents a vent from cracking, prevents a gas from leaking, makes a break variation of the vent uniform and improves safety. The secondary battery comprises a cap assembly including a cap plate. The cap plate comprises a vent formed on one surface of the cap plate; and at least one a reinforcing portion formed at a region adjacent to the vent, on the opposing or same surface of the cap plate to the surface on which the vent is formed.

## Description

The present invention relates to a secondary battery including a cap assembly that prevents a vent from cracking, prevents a gas from leaking, makes a break variation of the vent uniform and improves safety.

### Description of the Related Art

A secondary battery can be repeatedly used by repeating charging and discharging. Therefore, a secondary battery is economical compared to a disposable battery. These days, since a secondary battery has high capacity in a small size, secondary batteries are widely used as a driving electricity source of portable electronic products, such as mobile phones, notebook computers, camcorders, digital computers or the like.

Examples of a secondary battery include a nickel cadmium battery, a nickel metal hydride battery, a nickel zinc battery, a lithium ion secondary battery, a lithium polymer secondary battery and the like.

Among these batteries, a lithium secondary battery has been widely used because it is small in size and has a high capacity, a high operating voltage and a high energy density per unit weight.

A lithium secondary battery typically comprises an electrode assembly comprising a positive electrode plate, a negative electrode plate and a separator; and an electrolyte that transfers a lithium ion.

A lithium ion secondary battery generally uses a protective circuit, since the lithium ion secondary battery has a risk of exploding when an electrolyte leaks and a lithium transition metal is exposed in the air or when the battery is over-charged and its internal pressure increases by a chemical reaction.

Lithium ion secondary batteries can be classified into a can type battery and a pouch type battery, depending on the type of cell case receiving the electrode assembly. The can type batteries can be further classified into a cylinder type battery and a prismatic type battery or a post type having curved edges.

When a lithium ion secondary battery is a can type battery, the cell case generally comprises a metal, such as aluminum.

An opening is formed at one side of the can. After an electrode assembly and an electrolyte are received inside the can through the opening, the opening is sealed by a cap assembly, thereby manufacturing a secondary battery.

When a lithium ion secondary battery is a prismatic type battery, a cap assembly comprises a cap plate having a corresponding size and shape to an opening formed at one side of the can.

The cap plate includes a vent formed to prevent explosion of the secondary battery. That is, when the internal pressure of the secondary battery increases above a predetermined level, the vent breaks to discharge a gas, thereby preventing the secondary battery from exploding.

In general, a vent is formed by pressurizing a part of a cap plate made up of aluminum or the like. Thus, the vent is formed so as to be thinner than the other parts of the cap plate. Further, the vent includes a notch so that the vent easily breaks.

However, such a vent is easily damaged by an external impact as well as by the internal pressure of the secondary battery.

Moreover, when the internal pressure of the secondary battery increases, the can is inflated and deformed. Then, the shape of the cap plate bonded to the can is also deformed.

As the can is inflated, the cap plate is bent towards the inside of the can and accordingly the pressure acts on the vent formed on the cap plate.

Moreover, the vent is likely to be easily cracked around its corners by pressurization, and a gas inside the battery may leak through a crack of the vent.

Consequently, the vent cannot be normally operated when there is leaking gas and the time at which the vent breaks is not uniformly dependent on the amount of generated gas, thereby decreasing the safety of the battery.

### SUMMARY OF THE INVENTION

Therefore, aspects of the present invention provide a cap assembly that prevents a vent from cracking, prevents a gas from leaking, makes a break variation of the vent uniform and improves safety, and a secondary battery using the same.

The present invention provides a secondary battery comprising a cap assembly including a cap plate. The cap plate comprises a vent formed on one surface of the cap plate; and at least one a reinforcing portion formed at a region adjacent to the vent, on the opposing or same surface of the cap plate to the surface on which the vent is formed. The secondary battery may further comprise an electrode assembly; and a can that receives the electrode assembly and that defines an opening, wherein the cap assembly is positioned on the opening of the can.

The reinforcing portion is preferably formed on the opposing surface of the cap plate and so as to be thicker than other regions of the cap plate. In alternative, the reinforcing portion is formed on the same surface of the cap plate and as a depression in the region adjacent to the vent.

The reinforcing portion may be formed at the adjacent region to one side of the vent in a short width direction or a long width direction of the cap plate. In alternative, a pair of the reinforcing portions may be formed parallel either side of the vent in a short width direction and/or a long width direction of the cap plate. Finally, the reinforcing portion may be formed along the adjacent region to the vent, so as to surround the vent.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is an exploded perspective view of a secondary battery according to an embodiment of the present invention;
FIG. 2A is a plan view of a cap plate according to an embodiment of the present invention;
FIG. 2B is a sectional view taken along Line A-A' of FIG. 2A;
FIGS. 3A through 3E are plan views of the cap plate in which a reinforcing portion is formed in various shapes;
FIG. 4A is a plan view of a cap plate according to another embodiment of the present invention; and
FIG. 4B is a sectional view taken along Line B-B' of FIG. 4A.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures. In the drawings, the thickness and length of layers and regions are exaggerated for clarity.

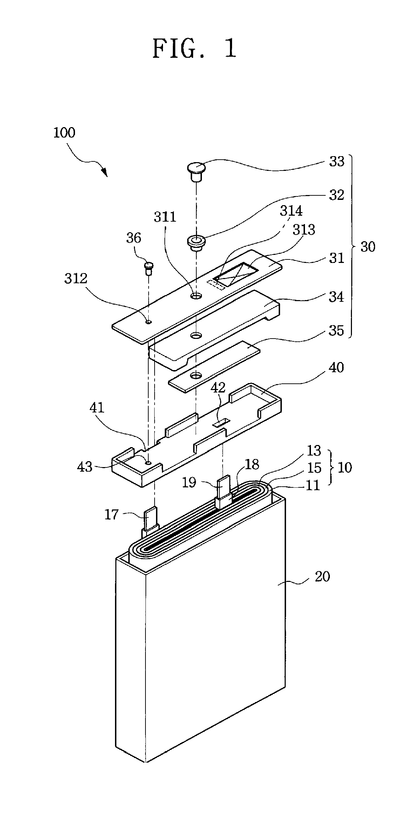

FIG. 1 is a separate perspective view of the constitution of a secondary battery 100 according to an embodiment of the present invention. The secondary battery 100 comprises an electrode assembly 10, a can 20 receiving the electrode assembly 10, and a cap assembly 30 positioned on an opening of the can 20.

The secondary battery 100 further comprises an insulating case 40 positioned on the electrode assembly 10 received in the can 20. The electrode assembly 10 comprises a first electrode plate 11, a second electrode plate 13 and a separator 15. The first electrode plate 11, the separator 15 and the second electrode 13 can be stacked and rolled in a jellyroll shape.

Hereinafter, the first electrode plate 11 is referred to as a positive electrode plate and the second electrode plate 13 is referred to as a negative electrode plate. However, it is to be understood that the polarity of the first electrode plate 11 and the second electrode plate 13 may be reversed, depending on the process of forming the polarity.

The positive electrode plate 11 is formed by applying a positive electrode active material to a positive electrode collector composed of aluminum or the like. The positive electrode plate 11 includes a portion to which the positive electrode active material is not applied (referred to as a 'positive electrode non-coating portion').

The negative electrode plate 13 is formed by applying a negative electrode active material to a negative electrode collector composed of copper or the like. The negative electrode plate 13 includes a portion to which the negative electrode active material is not applied (referred to as a 'negative electrode non-coating portion').

The separator 15 is interposed between the positive electrode plate 11 and the negative electrode plate 13 and prevents a short circuit between the two electrode plates 11 and 13. A surface of the separator 15 is in a porous membrane structure, providing a path through which lithium ions move.

A first electrode tab 17 electrically connected to a cap plate 31 of the cap assembly 30 is attached to the positive electrode non-coating portion so as to be electrified. A second electrode tab 19 electrically connected to an electrode terminal 33 of the cap assembly 30 is attached to the negative electrode non-coating portion so as to be electrified.

Accordingly, the first electrode tab 17 has the same polarity as that of the first electrode plate 11 and the second electrode tab 17 has the same polarity as that of the second electrode plate 13.

Hereinafter, the first electrode tab 17 is referred to as a positive electrode tab and the second electrode tab 19 is referred to as a negative electrode tab.

The positive electrode tab 17 and the negative electrode tab 19 may be composed of a material, such as nickel and may be respectively attached to the positive electrode non-coating portion and the negative electrode non-coating portion by ultrasonic welding, laser welding or the like. The material of the positive and negative electrode tabs and the bonding method thereof are not limited herein.

Insulating tape 18 is wound around the positive electrode tab 17 and the negative electrode tab 19 at the boundaries where the positive electrode tab 17 and the negative electrode tab 19 are respectively drawn outwardly from the rolled electrode assembly 10. The insulating tape 18 prevents a short circuit between the electrode plates 11 and 13.

The positive electrode collector may include stainless steel, nickel, aluminum, titanium, an alloy of these, or aluminum or stainless steel that is surface-processed using carbon, nickel, titanium and silver. As a specific, non-limiting example, the positive electrode collector may comprise aluminum or an aluminum alloy.

The negative electrode collector may include stainless steel, nickel, copper, titanium, an alloy of these, or copper or stainless steel that surface-processed using carbon, nickel, titanium and silver. As a specific, non-limiting example, the negative electrode collector may comprise copper or a copper alloy.

The separator 15 uses a typical separator material and is comprises a thermoplastic resin, such as polyethylene (PE), polypropylene (PP) or the like. The surface of the separator 15 has a porous membrane structure.

When a temperature inside the battery increases to be around the melting point of the thermoplastic resin, the separator 15 is melted so that the porous membrane structure is blocked to become an insulating film.

When the porous membrane structure is changed to become an insulating film, the movement of lithium ions between the positive electrode plate 11 and the negative electrode plate 13 is interrupted and no more electric current flows, so that an increase of the temperature inside the battery stops.

The can 20 may comprise a metal material and have a top comprising an opening. The can 20 receives the electrode assembly 10 and an electrolyte. The can 20 may further accommodate the insulating case 40, which may be positioned on the electrode assembly 10.

As the metal material, light and flexible aluminum, an aluminum alloy, stainless steel or the like may be used. When the can 20 is composed of the metal material, the can 20 is electrically conductive and therefore it can be used as an electrode terminal.

The can 20 may have a prismatic shape or an oval shape with curved corners. The opened top of the can 20 is sealed to the cap plate 31 by welding or thermo bonding.

The cap assembly 30 comprises: a cap plate 31, an insulating gasket 32, an electrode terminal 33, an insulating plate 34, a terminal plate 35 and an electrolyte injection-hole stopper 36.

The cap plate 31 is combined with the opening of the can 20 to be sealed. The cap plate 31 has the same size and shape as the opening and comprises a terminal through-aperture 311 into which the electrode terminal 33 is inserted.

Further, the cap plate 31 comprises an electrolyte injection hole 312 formed to provide a path to inject the electrolyte inside the can 20. The electrolyte injection-hole stopper 36 closes the electrolyte injection hole 312.

Further, the cap plate 31 comprises a vent 313 formed to discharge a gas by breaking when the pressure inside the battery increases. The vent 313 includes a notch formed to make it easy for the vent 313 to break.

Further, the cap plate 31 comprises a reinforcing portion 314 formed at a region adjacent to the vent 313. The reinforcing portion 314 prevents a crack due to external pressure from easily occurring in the vent.

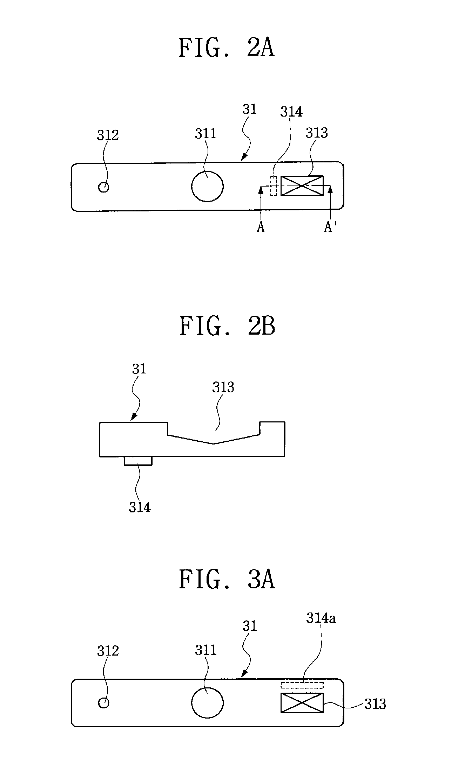

A detailed description of the vent 313 and the reinforcing portion 314 will be presented with reference to FIGS. 2A through 3E.

The insulating gasket 32 fits into the terminal through-aperture 311 formed on the cap plate 31 and comprises an insulating material to insulate the electrode terminal 33 from the cap plate 31 and an aperture formed at its middle part. The electrode terminal 33 is inserted into the aperture of the insulating gasket 32 and extends through the cap plate 31. The lower end of the electrode terminal 33 is connected to the terminal plate 35.

The insulating plate 34 is positioned under the cap plate 31 and insulates the outer surface of the terminal plate 35. The insulating plate 34 comprises an aperture through which the electrode terminal 33 passes to contact the terminal plate 35.

The terminal plate 35 is positioned under the insulating plate 34 and comprises a conductive material, so as to form an electrical path connected to the electrode terminal 33.

Further, the lower surface of the terminal plate 35 is electrically connected to the negative electrode tab 19, so that the electrode terminal 33 functions as a negative electrode terminal.

The insulating case 40 is positioned on the electrode assembly 10 inserted into the can 20, to prevent movement of the electrode assembly 10. The insulating case 40 comprises an edge wall formed so that the terminal plate 35 and the insulating plate 34 covering the terminal plate 35 are stably held.

Further, the insulating case 40 comprises a tab groove 41 and a tab aperture 42. The tab groove 41 and the tab aperture 41 respectively keep the positive electrode tab 17 and the negative electrode tab 19 spaced apart from each other by a predetermined distance to prevent a short circuit therebetween and to guide the positive electrode tab 17 and the negative electrode tab 19 when the tabs protrude from the electrode assembly 10.

Further, the insulating case 40 comprises an injection aperture 43 formed to provide a path through which the electrolyte that is injected through the electrolyte injection hole 312 can flow into the electrode assembly 10.

FIG. 2A is a plan view of a cap plate 31 according to an embodiment of the present invention and FIG. 2B is a sectional view taken along line A-A' of FIG. 2A.

With reference to FIGS. 2A and 2B, the cap plate 31 comprises a terminal through-aperture 311, an electrolyte injection hole 312 and a vent 313.

The vent 313 is formed on one surface of the cap plate 31 by a press or the like to be thinner than the other parts of the cap plate 31. When the pressure inside the battery increases, the vent 313 breaks, thereby discharging gas that has built up inside the battery and preventing the battery from exploding. The vent 313 includes a notch so that the vent 313 easily breaks.

Further, a reinforcing portion 314 is formed on another surface of the cap plate 31, that is, on the surface opposing to the surface on which the vent 313 is formed and at a region of the cap plate 31 adjacent to the vent 313, thereby preventing the vent 313 from being easily cracked by external pressure or the like.

Hereinafter, the surface on which the vent 313 is formed is referred to as a 'top surface' of the cap plate 31, and the other surface on which the reinforcing portion 314 is formed and opposing to the surface on which the vent 313 is formed is referred to as a 'bottom surface' of the cap plate 31.

The reinforcing portion 314 is formed in the manner that the adjacent region to the vent 313 is thicker than the other parts of the cap plate 31. The reinforcing portion 314 decreases the pressure applied to the vent 313 when the cap plate 31 is bent.

The reinforcing portion 314 may be formed by forming a part of the cap plate 31 so as to be thicker than remaining portions of the cap plate 31 or by attaching another member to the cap plate 31.

Further, when the cap plate 31 in the area of the vent 313 is bent, the reinforcing portion 314 functions as a support to minimize the bending of the vent 313. Therefore, the reinforcing portion 314 prevents the vent 313 from cracking around its corners due to pressure generated by the bending of the cap plate 31 in the area of the vent 313.

The reinforcing portion 314 is formed at an adjacent region to the vent 313. If the reinforcing portion 314 is formed to be spaced too far apart from the vent 313, the reinforcing portion 314 may not sufficiently absorb the external pressure. Preferably, the reinforcing portion 314 is arranged in between a distance to the vent 313 in the range of 2 to 10 mm.

Furthermore, when the reinforcing portion 314 is formed at the bottom surface of the cap plate 31 corresponding to the same location where the vent 313 is formed, the break characteristic of the vent 313 due to the increase of the pressure inside the battery may be obstructed. Therefore, it is not desirable to form the reinforcing portion 314 on the bottom surface of the cap plate 31 corresponding to the same location where the vent 313 is formed.

The reinforcing portion 314 may be formed in various shapes, depending on the shape of the vent 313. For example, in the embodiment of FIGS. 2A and 2B, the vent 313 is formed in a square shape.

As illustrated in FIG. 2A, the reinforcing portion 314 may be formed at the adjacent region to one side of the vent 313 in a short width direction of the cap plate 31.

FIGS. 3A through 3E illustrate various shapes and locations for the reinforcing portion 314. As illustrated in FIG. 3A, the reinforcing portion 314a may be formed at the adjacent region to one side of the vent 313 in a long width direction of the cap plate 31.

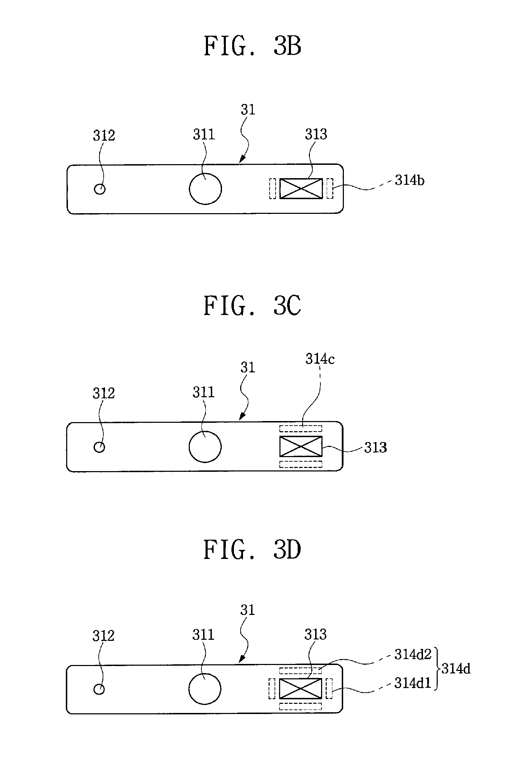

Further, as illustrated in FIGS. 3B and 3C, a pair of reinforcing portions 314b and 314c parallel to each other at either side of the vent 313 may be formed at the adjacent region to the vent 313 in the short width direction or long width direction of the cap plate 31.

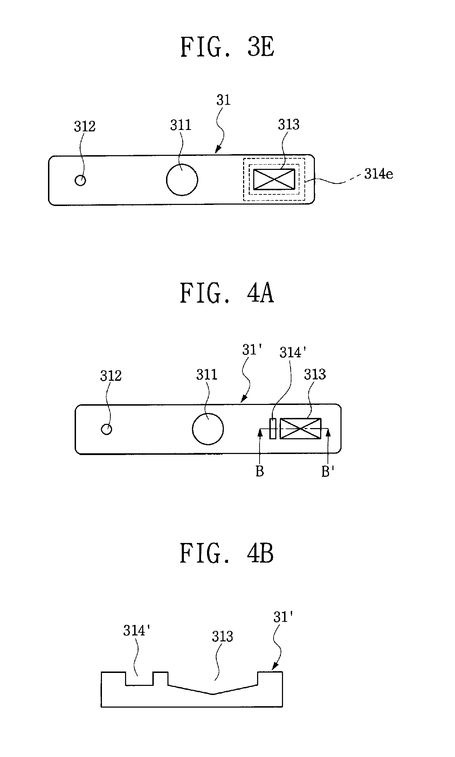

Further, as illustrated in FIGS. 3D and 3E, reinforcing portions 314d and 314e may be respectively formed at the adjacent region to the vent 313 in the short width direction and long width direction of the cap plate 31.

Then, as illustrated in FIG. 3D, the reinforcing portion 314d may be formed of a pair of reinforcing portions 314d1 and a pair of reinforcing portions 314d2 in a discontinuous manner. The reinforcing portions 314d1 are parallel to each other at either side of the vent 313 in the short width direction of the cap plate 31, and the reinforcing portions 314d2 are parallel to each other at either side of the vent 313 in the long width direction of the cap plate 31.

Further, as illustrated in FIG. 3E, the reinforcing portion 314e may be formed, along the adjacent region to the vent 313, so as to be continuous in the short width direction and the long width direction of the cap plate 31 and to surround the vent 313.

The shapes of the reinforcing portion 314 are not limited to the embodiments of FIGS. 2A, 2B and FIGS. 3A to 3D. The reinforcing portion 314 may be formed in other shapes or in a combination of shapes.

FIG. 4A is a plan view of a cap plate 31' according to another embodiment of the present invention, and FIG. 4B is a sectional view taken along line B-B' of FIG. 4A.

With reference to FIGS. 4A and 4B, the cap plate 31' comprises a terminal through-aperture 311, an electrolyte injection hole 312 and a vent 313.

The vent 313 is formed on one surface of the cap plate 31' by a press or the like to be thinner than the other parts of the cap plate 31 '. When the pressure inside the battery increases, the vent 313 breaks, thereby discharging gas that has built up inside the battery and preventing the battery from exploding. The vent 313 includes a notch so that the vent 313 easily breaks.

Further, a reinforcing portion 314' is formed on the same surface of the cap plate 31' as the vent 313. The reinforcing portion 314' is formed at a region adjacent to the vent 313, thereby preventing the vent 313 from being easily cracked by external pressure or the like. The reinforcing portion 314' may be formed at a region adjacent to the vent 313 and in the same direction as that in which the vent 313 is formed. That is, the reinforcing portion 314' may a depression formed in the cap plate 31' and may be formed by pressing the top surface of the cap plate 31' in the same direction that the cap plate 31' is pressed in forming the vent 313.

The reinforcing portion 314' serves to reduce locally concentrated stress or local deformation that may be applied to the vent 313 when the cap plate 31' is bent. Therefore, the reinforcing portion 314' prevents the vent 313 from cracking around its corners due to pressure generated by the bending of the cap plate 31' in the area of the vent 313.

The reinforcing portion 314' is formed at an adjacent region to the vent 313. If the reinforcing portion 314' is formed too far away from the vent 313, the reinforcing portion 314' may not sufficiently absorb the external pressure.

The reinforcing portion 314' may be formed in various shapes, depending on shapes of the vent 313. The reinforcing portion 314' may be formed in any one or in a combination of the shapes and locations similar to the reinforcing portion 314 illustrated in FIGS. 2A, 2B, 3A, 3B, 3C, 2D and 3E. Therefore, it is not necessary to repeat the description thereof provided above.

In accordance with aspects of the present invention, a vent is prevented from being cracked by external pressure and a gas is prevented from leaking inside a secondary battery. Therefore, a vent is improved and the safety of the battery is improved.

## Claims

1. A secondary battery (100) comprising:
a cap assembly (30) including a cap plate (31), the cap plate (31) comprising:
a vent (313) formed on one surface of the cap plate (31); and
at least one a reinforcing portion (314) formed at a region adjacent to the vent (313), on the opposing or same surface of the cap plate (31) to the surface on which the vent (313) is formed.

2. The secondary battery according to claim 1, further comprising:
an electrode assembly (10); and
a can (20) that receives the electrode assembly (10) and that defines an opening,
wherein the cap assembly (30) is positioned on the opening of the can (20).

3. The secondary battery according to claim 1 or 2, wherein the reinforcing portion (314) is formed on the opposing surface of the cap plate (31) and so as to be thicker than other regions of the cap plate (31).

4. The secondary battery according to claim 1 or 2, wherein the reinforcing portion (314) is formed on the same surface of the cap plate (31) and as a depression in the region adjacent to the vent (313).

5. The secondary battery according to any of claims 1 through 4, wherein the reinforcing portion (314) is formed at the adjacent region to one side of the vent (313) in a short width direction or a long width direction of the cap plate (31).

6. The secondary battery according to any of claims 1 through 4, wherein a pair of the reinforcing portions (314), are formed parallel either side of the vent (313) in a short width direction and/or a long width direction of the cap plate (31).

7. The secondary battery according to any of claims 1 through 4, wherein the reinforcing portion (314) is formed along the adjacent region to the vent (313), so as to surround the vent (313).
